# EUROPÄISCHE PATENTSCHRIFT

(11) **EP 1 771 063 B1**
(45) Veröffentlichungstag und Bekanntmachung des Hinweises auf die Patenterteilung: **13.02.2008**
(21) Anmeldenummer: 04738113.2
(22) Anmeldetag: 27.07.2004
(51) Int. Cl.: A01M 23/08, A01M 31/00

(54) **FANGVORRICHTUNG FÜR KLEINTIERE**
CATCHING DEVICE FOR SMALL ANIMALS
PIEGE POUR PETITS ANIMAUX

(43) Veröffentlichungstag der Anmeldung: 11.04.2007
(73) Patentinhaber: Malevez, Jean-Marc, 4451 Wintersingen (CH)
(72) Erfinder: Malevez, Jean-Marc, 4451 Wintersingen (CH)
(74) Vertreter: Werner, André
(86) Internationale Anmeldenummer: PCT/CH2004/000473
(87) Internationale Veröffentlichungsnummer: WO 2006/010279

(56) Entgegenhaltungen:
- DE-A1- 19 542 089
- US-A- 1 618 513
- US-A- 1 765 941
- US-A- 5 410 837

## Beschreibung

Die vorliegende Erfindung betrifft eine Fangvorrichtung für Kleintiere nach dem Oberbegriff von Anspruch 1 siehe z.B. Dokument US-A-1,618,513.

Um Kleintiere, wie beispielsweise Ratten, Nager, Mäuse, einzufangen werden Fangeinrichtungen wie Fallen eingesetzt. Diese Fallen müssen im Aufenthaltsgebiet der Kleintiere aufgestellt werden und selbsttätig wirken können, da diese Kleintiere in der Regel Scheu sind und nicht in die Nähe der Falle kommen, solange sich Menschen in deren Umgebung aufhalten.

So gibt es Fallen, in welchen die Tiere eingefangen werden, um danach entweder abtransportiert oder getötet zu werden. Wenn mit einer solchen Falle eine möglichst grosse Anzahl von Kleintieren gefangen werden soll ergeben sich eine Reihe von Problemen.

So lassen sich mit herkömmlichen Gitterfallen für Mäuse jeweils nur einzelne Mäuse fangen. Der Fangmechanismus ist dabei für einen einzelnen Fangvorgang konzipiert, so dass die Falle jeweils nach einem erfolgreichem Fangvorgang geleert und der Fangmechanismus wieder aktiviert werden muss. Damit eignen sich derartige Fallen praktisch nur für den sporadischen Einsatz in Umgebungen mit nur wenigen zu fangenden Tieren.

So ist aus der US 5,235,779 eine Tierfalle für den Einsatz auf Oberflächen bekannt, bei welchem die Tiere über seitliche Öffnungen eines zylindrischen, nach oben offenen Gehäuses in das Gehäuseinnere eindringen können. Angelockt werden die Tiere dabei durch eine Lockmittel, welches in der Mitte des Gehäuseinneren an einem Träger angeordnet ist. Das Lockmittel hält dabei einen ebenfalls zylindrischen, nach unten offenen Verschlusskörper in einer erhöhten Stellung, so dass die Öffnungen für die Tiere zugänglich sind. Wenn nun ein Tier in das Gehäuseinnere eindringt und sich am Lockmittel zu schaffen macht, fällt der Verschlusskörper nach unten und verschliesst damit die Öffnungen. Damit bleibt das Tier, welches sich im Inneren der Tierfalle befindet, gefangen, die Tierfalle selbst ist damit aber zum Fangen von weiteren Tiere nicht mehr benutzbar, bis das gefangene Tier entfernt und die Tierfalle neu geladen worden ist.

Die Aufgabe der vorliegenden Erfindung bestand darin, eine Fangvorrichtung für Kleintiere bereitzustellen, welche ein selektives und wiederholtes Fangen von Kleintieren erlaubt, wobei die gefangenen Tiere die Fangvorrichtung selbständig nicht mehr verlassen können.

Eine weitere Aufgabe bestand darin, die gefangenen Kleintiere ggf. möglichst unmittelbar und zuverlässig zu töten, wobei gewisse Tierarten verschont bleiben sollen.

Die Aufgabe wird erfindungsgemäss durch eine Fangvorrichtung mit den Merkmalen von Anspruch 1 gelöst. Bevorzugte Ausführungsformen ergeben sich aus den Merkmalen der weiteren Ansprüche 2 bis 19.

Bei der erfindungsgemässen Fangvorrichtung für Kleintiere mit einem Behälter, einem eine Öffnung aufweisenden Kanal, welcher in den Behälter mündet sowie einer schwenkbar im Kanal resp. Behälter angeordneten Klappe, welche in ihrer Ruhestellung den Öffnungsquerschnitt des Kanals weitestgehend verschliesst, weist die Klappe an ihrem freien Ende einen Knick in Richtung des Bodens des Kanals resp. Behälters auf. Weiter weist die Klappe als Abschluss eine Anzahl von stabförmigen Fortsätzen auf. Es hat sich überraschen gezeigt, dass durch diese Formgebung der Klappe sich diese durch ein im Innern des Behälters gefangenes Kleintier praktisch nicht mehr öffnen lässt. Im Gegensatz dazu können gerade Klappen ohne Knick durch die gefangen Tiere innert kurzer Zeit geöffnet werden, womit die Tiere die Falle wieder verlassen können. Selbst bei "herkömmlichen" Klappen, welche einen nach oben weisenden Knick aufweisen, damit die in der Falle befindlichen Tiere durch Auftreten auf den Knickbereich in der geschlossenen Stellung der Klappe diese blockieren, realisieren die Tiere in kurzer Zeit, dass sich die Klappe dennoch anheben lässt und sich die Klappe infolge der Form nach einem leichten Anheben beim Fluchversuch des Tieres schliesslich vollständig resp. genügend öffnet.

Vorzugsweise ist die Klappe als Gitter oder aus durchsichtigem Material ausgebildet, weiter vorzugsweise als feinmaschiges Gitter, und die Fortsätze sind aus den im Wesentlichen parallel zur Längsachse des Kanals resp. Behälters verlaufenden Gitterstäben gebildet. Die Gitterform erscheint einerseits den Tieren nicht als Hindernis, womit die Fangvorrichtung auch tatsächlich betreten wird, und erlaubt auch den Einbezug von Ködermitteln innerhalb des Gehäuses. Weiter kann je nach Gittergrösse erreicht werden, dass Tiere von einer bestimmten Grösse resp. Kleinheit die Fangvorrichtung ohne weiteres wieder verlassen können. Damit kann eine gewisse Selektion von den zu fangenden Tieren erfolgen. Die Fortsätze können direkt aus den entsprechend verlaufenden Gitterstäben gebildet werden, was zu einem sehr einfachen Aufbau der Klappe führt und diese kostengünstig produzierbar ist.

Vorzugsweise liegen die Fortsätze in Ruhestellung der Klappe auf dem Boden des Kanals resp. des Behälters auf resp. stehen die Spitzen dieser Fortsätze unmittelbar auf dem Boden des Kanals resp. des Behälters auf. Sie können aber auch im Boden einliegen (→ Schlitze dazu im Boden). Damit ist es nicht einfach möglich für ein gefangenes Tier, unterhalb dieser Fortsätze zu gelangen, sei es mit der Schnauze, der Pfote oder einem anderen Körperteil. Wenn das Tier dennoch versucht, die Klappe durch untergreifen des freien Endes der Klappe anzuheben, werden sich aufgrund der nach unten gebogenen Ausführung dieses Bereiches der Klappe die Spitzen der Fortsätze der Klappe in das dies Klappe anhebende Körperteil des Tieres einbohren. Wenn sich der Öffnungsdruck des Tieres steigert, vergrössert sich auch der Druck dieser Spitzen auf das Tier und es wird seinen Fluchtversuch abbrechen. Da das Tier im Innern des Gehäuses nicht unmittelbar bedroht ist, wird es sich nicht verletzen und es wird aufgrund dieses Effektes in der Regel keinen weiteren Fluchtversuch mehr unternehmen und bleibt damit in der Fangvorrichtung gefangen.

Weiter vorzugsweise weist die Klappe seitlich je einen Schwenkzapfen auf, welche die Schwenkachse bilden, und welche in entsprechenden Bohrungen der Seitenwände des Kanals resp. Behälters eingreifen oder in die seitliche Verstrebung des Kanals. Damit wird auf einfachste Weise die Schwenkbarkeit der Klappe erreicht. Weiter hat diese Befestigungsart den Vorteil, dass sehr grosse Tiere, beispielsweise Prädatoren, welche in die Fangvorrichtung eingedrungen sind, diese wieder verlassen können, indem sie praktisch die Klappe aus ihrer Halterung aushebeln. Zwar wird damit die Fangvorrichtung zeitweilig ausser Betrieb gesetzt, aber es wird verhindert, dass damit unerwünschterweise auch Prädatoren wie beispielsweise Wiesel oder Hermeline gefangen werden.

Vorzugsweise sind weiter Federmittel ausgebildet, welche auf die Klappe derart einwirken, dass die Klappe in der Ruheposition gegen die Federwirkung der Federmittel gehalten ist. Damit wird die Klappe nicht allein durch die Schwerkraft in ihrer Ruheposition gehalten, was gerade bei sehr leichten Klappen, d.h. Klappen mit einem sehr geringen Eigengewicht, von Vorteil ist, sondern die Ruhe- resp. Schliessposition durch die Federkraft unterstützt. Entsprechend den zu fangenden Tieren kann die Federkraft entsprechend hoch oder klein eingestellt werden, was wiederum zur Selektion der zu fangen Tiere verwendet werden kann.

Vorzugsweise ist der Behälter kastenförmig oder rohrförmig ausgebildet, wobei mindestens ein Ende eine Öffnung aufweist und damit dieser Endbereich den Kanal bildet. Damit kann die Fangvorrichtung aus einem sehr einfach ausgebauten Behälter gebildet werden, welcher damit auch wirtschaftlich und kostengünstig hergestellt werden kann.

Vorzugsweise weist der Behälter mindestens einen lösbaren, feststellbaren oder dreh- oder kippbaren Deckel auf, welcher sich vorzugsweise über die gesamte Länge des Behälters erstreckt. Damit kann die Fangvorrichtung resp. der Behälter sehr einfach geleert werden, d.h. die gefangenen Tiere können durch das Öffnen des Deckels aus dem Innern des Behälters entfernt werden. Wenn der Deckel schwenkbar am Behälter angeordnet ist, kann der Deckel beispielsweise durch einen Prädator, z.B. Hermelin, Wiesel, Marder, Fuchs, durch die Nase durch Anheben geöffnet werden und die darin gefangenen Tiere von diesem aus dem Behälter entnommen werden.

Vorzugsweise ist der Deckel am oberen Rand einer Seitenwand des Behälters mit Scharnieren befestigt, wobei die Scharniere innerhalb oder ausserhalb des Behälters angeordnet sind. Damit wird auf einfache Weise die Schwenkbarkeit des Deckels erreicht. Wenn die Scharniere innenliegend angeordnet sind, sind sie weniger der Verschmutzung oder weiteren schädlichen, äusseren Einflüssen ausgesetzt und behalten damit länger ihre einwandfreie Funktionssicherheit bei.

Der schwenkbare Deckel kann auch von gefangenen Prädatoren (Hermelin, Wiesel etc.) von innen hochgedrückt werden, was die Flucht erlaubt und das Leeren der Falle von gefangenen Mäusen.

Vorzugsweise sind innerhalb des Behälters angeordnete Begrenzungsmittel zur Begrenzung der Schwenkbewegung der Klappe ausgebildet, weiter vorzugsweise einstellbare Begrenzungsmittel. Damit kann der maximale Öffnungsquerschnitt der Fangvorrichtung praktisch beliebig und stufenlos eingestellt werden und damit der zu fangenden Zielgruppe angepasst werden. Damit wird beispielsweise verhindert, dass zu grosse Tiere überhaupt in die Fangvorrichtung eindringen können.

Vorzugsweise weist mindestens im Bereich des Kanals der Boden eine Rauhigkeit/Zahnung auf, vorzugsweise eine geriffelte oder gezahnte Struktur. Dadurch, dass der Bodenbereich eine gewisse Rauhigkeit aufweist und nicht glatt ist, wird der Eintritt der Tiere in die Fangvorrichtung erleichtert und zugleich Entfliehen erschwert. Dies ist insbesondere dann von Vorteil, wenn schlechtes Wetter mit grosser Feuchtigkeit resp. Regenfällen herrscht.

In einer weiteren, erfindungsgemäss bevorzugten Fangvorrichtung sind innerhalb des Behälters bewegliche Mittel angeordnet, welche mit einem ausserhalb des Behälters angeordnetem Anzeigelement verbunden sind. Damit wird von Aussen leicht erkennbar, ob sich etwas im Innern der Fangvorrichtung seit dem Zeitpunkt des Aufstellens und in Betrieb nehmen der Fangvorrichtung verändert hat. Dies ist insbesondere dann der Fall, wenn ein Tier in die Falle eingedrungen ist. Der Vorteil bei einer von Aussen optisch sichtbaren Anzeige liegt darin, dass die Fangvorrichtung nicht geöffnet werden muss oder sich die kontrollierende Person nicht bücken muss und von Aussen über die Öffnung zu erkennen versuchen muss, ob sich ein Tier in der Fangvorrichtung befindet. Dies erspart gerade bei der Kontrolle einer grösseren Anzahl von Fangvorrichtungen, welche in einem gemeinsamen Bereich angeordnet sind, beträchtlich Zeit.

Vorzugsweise ist das Mittel aus einem vom Behälterinnern durch eine im Behälter ausgebildete Bohrung nach Aussen hindurch geführten Stab gebildet, welcher im Innern des Behälters mit einem mindestens über einen Teil des Behälterquerschnittes reichendem Element verbunden ist. Damit wird auf einfachste Weise ein bewegliches Anzeigeelement geschaffen, welches zwingend von einem im Innern der Fangvorrichtung befindlichen Tier bewegt werden muss, da sich das im Innern der Fangvorrichtung befindliche Element über einen wesentlichen Bereich des Öffnungsquerschnittes der Fangvorrichtung erstreckt. Vorteilhaft wird dieses Element in der Grundstellung quer zur Längsachse der Fangvorrichtung ausgerichtet angeordnet, so dass ein sich durch diesen Bereich bewegendes Tier dieses Element bewegt, in der Regel bis an die Wand drückt, und damit nach Aussen seine Anwesenheit optisch angezeigt wird. Ein Tier wird sich auf jeden Fall durch den gesamten erreichbaren Innenbereich der Fangvorrichtung bewegen, da es einen Ausgang aus dieser Fangvorrichtung suche wird.

Vorzugsweise ist dabei das Element aus einer lichtdurchlässigen Platte oder aus einem Stab, vorzugsweise einem U-förmig gebogenen Stab gebildet. Damit ist das Element für das im Innern der Fangvorrichtung befindliche Tier praktisch nicht sichtbar und es wird damit das Element auf jeden Fall bewegen. Hierfür kann in der Regel bereits ein einfaches, dünnes Stabelement genügen, oder eine einfache gitterartige Struktur vorgesehen sein.

Weiter wird erfindungsgemäss eine Fangvorrichtung beansprucht, bei welcher der Behälter mindestens einen oberhalb des Kanals angeordneten, nur durch eine im Deckenbereich des Kanals oder des Behälters angeordnete Öffnung zugänglichen zweiten, geschlossenen Raum aufweist. Durch diesen doppelstöckigen Aufbau kann erreicht werden, dass nur bestimmte Tierarten in diesen zweiten Raum eindringen können. So kann insbesondere vermieden werden, dass neben Mäusen, welche als Zielgruppe mit der Fangvorrichtung gefangen werden solle, auch niedere Kriechtiere oder Amphibien in diesen zweiten Raum gelangen. Damit wird also die Selektierbarkeit der zu fangenden Tierart in der Falle weiter ausgebaut.

Vorzugsweise ist dabei der zweite Raum durch einen zweiten, über dem ersten Behälter angeordneten Behälter gebildet. Dieser Behälter kann praktisch mit denselben Massen, zumindest aber mit demselben Durchgangsquerschnitt aufgebaut sein. Damit können für beide Räume praktisch dieselben Basisteile für den Aufbau der Fangeinrichtung verwendet werden, was sich günstig auf die Produktionskosten auswirkt.

Weiter sind vorzugsweise unterhalb resp. seitlich der Öffnung Steighilfen angeordnet, vorzugsweise durch an der Wand des Behälters angeordnete Sprossen resp. Leitern. Damit wird beispielsweise Mäusen der Einstieg in den zweiten Raum über die im Deckenbereich des ersten Raumes angeordnete Öffnung erleichtert, während die niederen Tiere und Amphibien derartige Einstiegshilfen nicht benutzen werden. Damit wird eine zuverlässige Selektion der zu fangenden Tiere weiter unterstützt.

Vorzugsweise ist innerhalb des oberen Gehäuses mindestens eine mechanische Schlagfalle angeordnet. Damit kann erreicht werden, dass die Tiere nicht nur gefangen, sondern zugleich auch zuverlässig getötet werden. Vorteilhaft wird bei einer Ausführung der Fangvorrichtung mit zwei Räumen die Schlagfalle lediglich im zweiten Raum angeordnet, um zu verhindern, dass allenfalls in die Fangvorrichtung eingedrungene Tiere, welche aber nicht gefangen werden sollen, durch diese Schlagfalle getötet werden. Ein weiterer Vorteil bei der Anordnung einer Schlagfalle ist darin zu sehen, dass das Kontrollintervall zur Überprüfung der Fangvorrichtung damit vergrössert werden kann, da die gefangenen Tiere darin bei einem zu grossen Kontrollintervall nicht durch aushungern oder austrocknen sterben sondern unmittelbar resp. sofort getötet werden.

Vorzugsweise kann im oberen oder im unteren Bereich ein Giftköder angeboten werden, womit die gefangenen Tiere getötet oder nur eingeschläfert werden. Somit ist die Verbreitung von vergifteten Tieren in die Umwelt verunmöglicht.

Vorzugsweise weist das Gehäuse einen im Wesentlichen rechteckigen Querschnitt auf. Die Fangvorrichtung lässt sich damit in einfacher Form, beispielsweise durch einen eckigen Behälter mit rechteckigem oder quadratischem Querschnitt realisieren, beispielsweise unter Verwendung von entsprechenden Profilen, welche als Meterware erhältlich sind.

Vorzugsweise ist die erfindungsgemässe Fangvorrichtung mit einem mindestens bereichsweise im Boden eingebrachten und in sich geschlossenen Drahtzaun verbunden, vorzugsweise einem feinmaschigen Drahtzaun. Wenn bestimmte flächige Räume wie beispielsweise Felder von Kleintieren, wie beispielsweise Mäusen, befreit werden sollen, kann um das Gebiet herum ein Drahtzaun angeordnet werden, welcher in eine gewisse Tiefe in den Boden eingebracht wird und sich über eine gewisse, der Grösse der zu fangenden Tiere angepassten Höhe erstreckt. Damit wird einerseits verhindert, dass weitere derartige Tiere in den freizuhaltenden Bereich von Aussen eindringen, während andererseits andere Tiere, beispielsweise Prädatoren, problemlos den Drahtzaun in beiden Richtungen überwinden können. Wenn nun eine oder mehrere erfindungsgemässe Fangvorrichtungen mit diesem Drahtzaun verbunden sind, so erscheint der Eingang in diese Fangvorrichtung für die zu fangenden Tiere wie eine Durchgangsöffnung durch den Drahtzaun hindurch, wodurch diese Tiere in der Fangvorrichtung eingefangen werden können. Gerade für sehr populationsreiche Bereiche eignet sich diese Anordnung besonders gut für eine erste, grosse und schnelle Reduktion des Bestandes. Es hat sich gezeigt, dass sich damit beispielsweise Mäusepopulationen auf effiziente Weise sehr schnell massiv reduzieren lassen.

Ausführungsbeispiele der Erfindung werden nachfolgend anhand von Zeichnungen noch näher erläutert. Es zeigen
Fig. 1 die schematische Ansicht im Teilschnitt einer erfindungsgemässen Fangvorrichtung;
Fig. 2 schematisch den Längsschnitt durch den Eingangsbereich der Fangvorrichtung nach Figur 1;
Fig. 3 den Längsschnitt nach Figur 2 in geöffneter Stellung mit einem eindringenden Tier;
Fig. 4 den Längsschnitt nach Figur 2 in geschlossener Stellung mit einem gefangen Tier;
Fig. 5 schematisch den Längsschnitt durch den Eingangsbereich einer alternativen Ausführungsform einer erfindungsgemässen Fangvorrichtung;
Fig. 6 schematisch den Querschnitt durch eine erfindungsgemässe Fangvorrichtung mit einem stabförmigen, gebogenen Betätigungselement für ein externes Anzeigemittel;
Fig. 7 schematisch den Querschnitt entsprechend Figur 6 mit einem flächigen Betätigungselement des Anzeigemittels;
Fig. 8 schematisch den Querschnitt entsprechend Figur 6 mit einem alternativen, stabförmigen Betätigungselement;
Fig. 9 schematisch den Querschnitt entsprechend Figur 6 mit einem weiteren, alternativen stabförmigen Betätigungselement;
Fig. 10 schematisch den Längsschnitt durch eine alternative Ausführungsform einer erfindungsgemässen Fangvorrichtung mit zwei übereinander angeordneten Räumen;
Fig. 11 den Querschnitt durch eine Fangvorrichtung entsprechend Figur 1 mit klappbarem Deckel;
Fig. 12 schematisch die Ansicht einer erfindungsgemässen Fangvorrichtung angeordnet unmittelbar bei einem Zaun;
Fig. 13 schematisch die Aufsicht auf eine alternative Anordnung von zwei erfindungsgemässen Fangvorrichtungen entsprechend Figur 12; und
Fig. 14 schematisch die Aufsicht auf eine weitere, alternative Anordnung von zwei erfindungsgemässen Fangvorrichtungen entsprechend Figur 12.

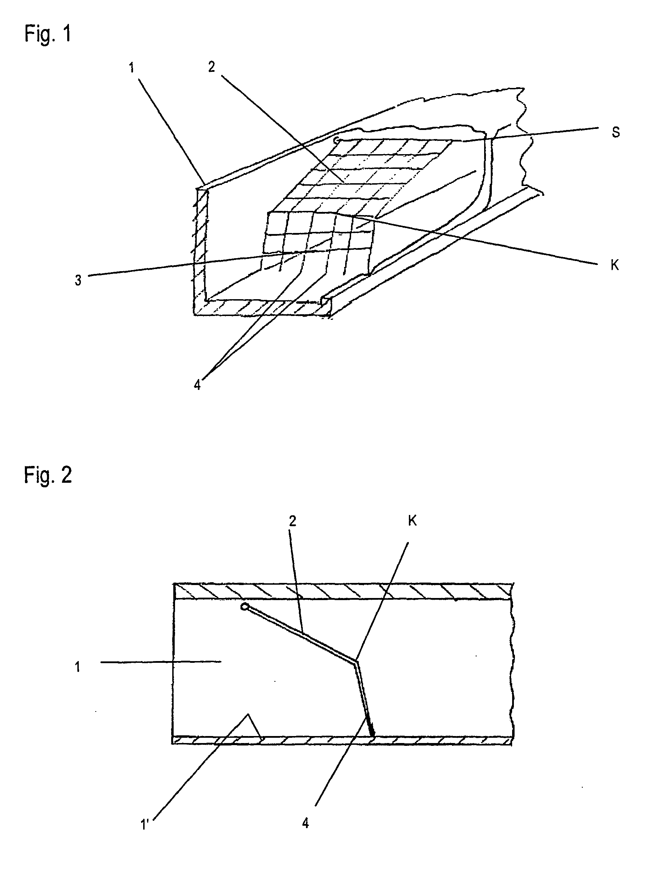

In Figur 1 ist schematisch die Ansicht des Eingangsbereiches einer erfindungsgemässen Fangvorrichtung im Teilschnitt dargestellt, mit dem einen rechteckigen Querschnitt aufweisenden Behälter 1 und dem im Innern der Behälters 1 schwenkbar angeordneten Klappe 2.

Die Klappe 2 weist eine gitterförmige Struktur auf und besitzt an ihrer freien Kante 3 stabförmige Fortsätze resp. Spitzen 4. Vorteilhaft sind diese Spitzen 4 direkt aus den längs verlaufenden Streben der gitterförmigen Struktur der Klappe 2 gebildet. Die Klappe 2 weist einen parallel zur Verschwenkachse S verlaufenden Knickkante K auf, wobei der untere, freie Bereich der Klappe 2 in Bezug auf diesen Knick K nach unten abgebogen verlaufend ausgebildet ist.

In Figur 2 ist dieser Bereich nochmals schematisch im Längsschnitt dargestellt, wobei insbesondere die Knickkante K mit dem nach unten gebogenen, freien Bereich der Klappe 2 besonders deutlich dargestellt ist. In dieser in Figur 2 dargestellten Ruheposition der Klappe 2 liegen die Spitzen 4 der Klappe 2 auf dem Boden 1' des Behälters 1 auf.

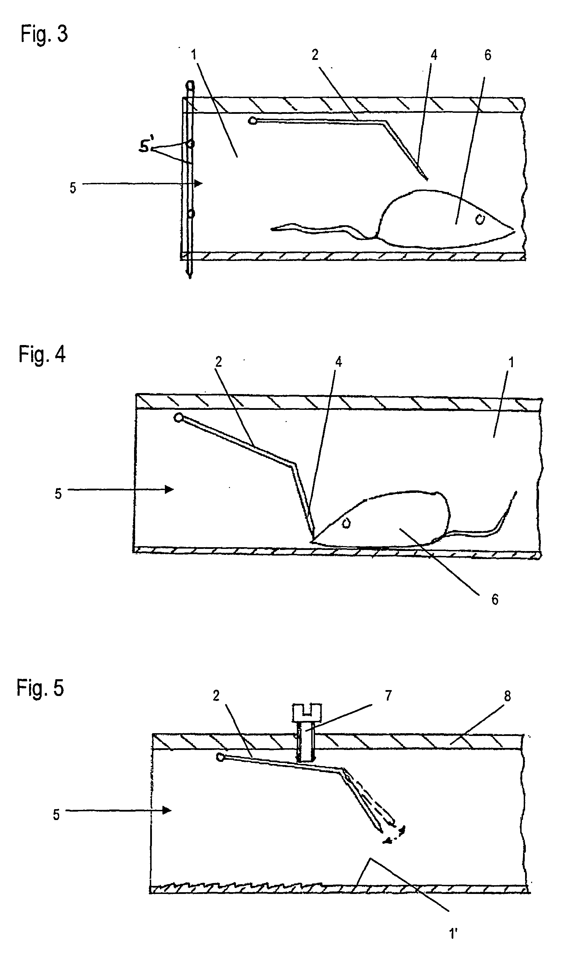

In Figur 3 ist nochmals schematisch der Längsschnitt durch die erfindungsgemässe Fangvorrichtung entsprechend Figur 2 dargestellt, wobei hier die Klappe 2 durch eine durch die Öffnung 5 des Behälters 1 eindringendes Tier 6, beispielsweise einer Maus, geöffnet ist.

Die vorzugsweise lediglich durch ihr Eigengewicht in der Ruheposition gehaltene Klappe 2 lässt sich einfach und praktisch ohne Widerstand beim Eindringen durch das Tier 6 wie dargestellt nach oben klappen und ermöglicht damit das Eindringen des Tieres 6 in das Innere des Behälters 1. Die Spitzen 4 verunmöglichen schon hier praktisch den Rücktritt des Tieres. Je nach Federkraft des Drahtgitters, kann die erforderliche Bewegung der Klappe vergrössert oder verringert werden, bis hin zur vollständigen Aufhebung der Drehbewegung (nur bei sehr dünnen, sehr federnden Drahtgittern möglich).

Die Klappe 2 kann aber auch unter Verwendung eines Federelementes, beispielsweise einer Drehfeder, welche auf die Verschwenkachse S der Klappe 2 wirkt, aktiv in die Ruheposition gedrückt werden, so dass ein Tier 6 bereits beim Eintreten in die Fangvorrichtung einen gewissen Druck auf die Klappe 2 ausüben muss. Dies kann bereits zur Selektion der zu fangenden Tiere 6 eingesetzt werden, indem besonders kleine und schwache Tiere 6 dadurch die Fangvorrichtung gar nicht betreten werden resp. können. Weiter erschwert dieser Federdruck anschliessend das Entweichen der Tiere 6 aus dem Innern des Behälters 1 wesentlich resp. verunmöglicht einen solchen Fluchtversuch nachhaltig. Ein grossmaschiges Drahtgitter 5' in der Eingangsöffnung 5 verhindert das Eindringen von grösseren Tieren, Schmutz oder Laub.

Durch die im Vergleich zur Längsachse des Behälters 1 resp. dem Boden schräg verlaufende Richtung der Spitzen 4 der Klappe 2 kann sich das Tier 6 ohne grossen Widerstand oder Störung nach rechts in das Innere des Behälters bewegen.

Wenn das Tier 6 sich wieder aus dem Innern des Behälters 2 in Richtung der Öffnung 5 entfernen will, so wird dies durch die nun wieder geschlossene Klappe 2 nicht gelingen, wie schematisch in Figur 4 dargestellt.

Wenn das Tier 6, beispielsweise mit seiner Nase, versucht die Klappe 2 anzuheben, so kommen die Spitzen 4 auf den entsprechenden Körperteil des Tieres 6 in Auflage. Wenn nun das Tier 6 versucht, die Klappe 2 weiter zu öffnen und sich in Richtung der Öffnung 5 zu bewegen, d.h. die Klappe 2 nach oben zu verschwenken, werden sich die Spitzen 4 aufgrund der Biegung der Klappe 2 stärker in das Körperteil des Tieres 6 hineindrücken und das Tier 6 damit veranlassen, den Fluchtversuch abzubrechen. Da in der Regel das Innere des Gehäuses 1 dunkel ist und dem Tier 6 keine unmittelbare Gefahr droht, wird es nur wenige Öffnungsversuch der Klappe 2 unternehmen und in Ruhe innerhalb des Gehäuses 1 warten.

In Figur 5 ist schematisch der Längsschnitt durch eine alternative Ausführungsform einer erfindungsgemässen Fangvorrichtung dargestellt. Wiederum ist die Klappe 2 um die Verschwenkachse S schwenkbar im Gehäuse 1 der Fangvorrichtung gelagert. Als Lagerung können beispielsweise einfache, in den beiden Seitenwänden des Gehäuses 1 ausgebildete Bohrungen dienen, in welche beispielsweise die oberste, verbreiterte Strebe der gitterförmigen Klappe 2 eingeführt ist.

Wenn verhältnismässig dünner Draht als Streben für den Aufbau der gitterförmigen Klappe 2 verwendet wird, kann damit erzielt werden, dass verhältnismässig grosse Tiere, wie beispielsweise Prädatoren, welche in das Innere des Gehäuses 1 der Fangvorrichtung durch die Öffnung 5 eingedrungen sind, unter entsprechender Kraftaufwendung die Klappe 2 aus diesen Bohrungen herausdrücken können und damit die Fangvorrichtung wieder verlassen können. Damit wird verhindert, dass derartige Tiere in solche Fallen gefangen werden, wenn dies nicht vorgesehen ist.

Weiter kann für eine noch bessere Selektion der überhaupt in das Innere der Fangvorrichtung eindringenden Tiere eine Beschränkung der maximalen Auslenkung der Klappe 2 vorgenommen werden. Dies kann beispielsweise wie in Figur 5 dargestellt mittels einer Schraube 7 erfolgen, welche von oben durch den Deckel 8 des Gehäuses 1 nach unten in den Raum oberhalb der Klappe 2 höhenverstellbar eingeführt ist. Damit kann praktisch stufenlos die Beschränkung der maximalen Auslenkung der Klappe 2 eingestellt werden, was zu einer Beschränkung der maximalen Durchgangshöhe in Richtung des Inneren der Fangvorrichtung führt.

Weiter kann beispielsweise im Bereich der Klappe 2 der Boden 1' des Behälters 1 aufgeraut oder gezahnt ausgebildet sein. Dies kann beispielsweise durch Ausbildung einer entsprechenden Profilierung, beispielsweise von quer verlaufenden, sägezahnartigen Nuten, erfolgen, oder durch Anbringen resp. Ausbilden einer anderweitigen Struktur. Damit wird der Zugang zum Bereich der Klappe 2 erleichtert, gerade wenn beispielsweise feuchtes oder nasses Wetter herrscht und bei einem glatten Belag eine erhöhte Rutschgefahr besehen würde.

Wenn die Profilierung in der in Figur 5 dargestellten Weise ausgeführt wird, d.h. gegen die Öffnung 5 sind die flachen Rampen und gegen das Innere des Gehäuses 1 sind die steilen Rampen der sägezahnartigen Profilierung ausgeführt, so behindert diese Ausbildung eine Bewegung der Tiere vom Innern des Gehäuses 1 in Richtung der Öffnung 5 und unterstützt damit zusätzlich die Sperrwirkung der Klappe 2.

Durch entsprechende Dimensionierung des Vorraumes, d.h. des Raumes zwischen Öffnung 5 und Klappe 2, kann das Hineingreifen in die Falle durch grössere Tiere (z.B. Fuchs oder Katze) verunmöglicht werden, um Verletzungen solcher Tiere vorzubeugen.

Für die Anzeige der Anwesenheit eines Tieres im Innern des Behälters können mechanische oder elektronische Mittel vorgesehen sein, welche an der Aussenseite mittels eines Anzeigeelementes sichtbar gemacht werden.

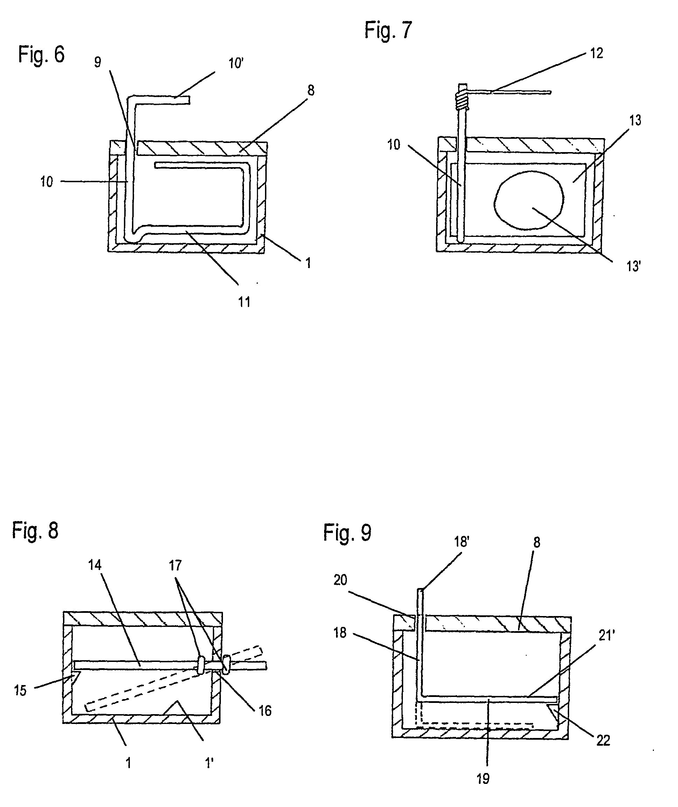

In Figur 6 ist der Querschnitt durch einen erfindungsgemässen Behälter 1 mit rechteckigem Querschnitt dargestellt, welcher eine durch eine Öffnung 9 im Deckel 8 des Behälters 1 geführte Stange 10 aufweist, welche an ihrem äusseren, freien Ende 10' rechtwinklig abgebogen ist.

Die Stange 10 ist nach unten bis auf den Boden 1' des Behälters 1 geführt und weist dort eine nach unten gerichtete Rundung resp. einen Bogen als Drehpunkt auf. Parallel zum freien Ende 10' ist ein im Wesentlichen U-förmig gebogener Bügel 11 ausgebildet, welcher sich praktisch über die gesamte Breite des Durchgangsraumes des Behälters 1 erstreckt. Wenn sich nun ein Tier durch diesen Bereich des Behälters 1 hindurch bewegt, so wird es an den Bügel 11 anstossen und damit die Stange 10 um ihre Hochachse verdrehen. Damit wird sich auch das freie Ende 10' von Aussen sichtbar von der ursprünglich quer zur Längsachse der Fangvorrichtung verlaufenden Richtung in eine Richtung parallel zur Längsachse verdrehen. Damit kommt der Bügel 11 mehr oder weniger parallel zur entsprechenden Seitenwand des Behälters 1 zu liegen und wird sich auch bei nachmaliger Bewegung des Tieres in diesem Bereich nicht mehr weiter verdrehen. Damit dient die Richtung des freien Endes 10' als optische Anzeige für die Anwesenheit eines oder ggf. mehrerer Tiere im Innern der Fangvorrichtung, und diese braucht nicht jedes Mal geöffnet oder durch seitlichen Einblick von der Öffnung 5 her untersucht zu werden.

In Figur 7 ist eine weitere, alternative Ausführungsform einer derartigen optischen Anzeige dargestellt. Die Stange 10 weist hier wiederum ein von Aussen gut sichtbares freies Ende auf, welches hier durch einen auf das obere Ende der Stange 10 aufgesetzte Drahtstück 12 gebildet ist. Im Innern des Gehäuses 1 ist die Stange 10 mit einer Platte 13 verbunden. Diese Platte 13 kann beispielsweise verdrehsicher in einem längs zur Hochachse der Stange 10 verlaufend ausgebildeten Schlitz eingesteckt und darin befestigt sein. Die Platte 13 kann vorteilhaft in ihrem mittleren Bereich eine Ausnehmung 13' aufweisen und beispielsweise aus einem dünnen Blech bestehen oder aus einem transparenten Kunststoffmaterial gebildet sein.

In Figur 8 ist eine weitere Variante einer optischen Anwesenheitsanzeige dargestellt. Dabei ist eine im Wesentlichen parallel zum Boden 1' des Gehäuses 1 angeordnete Stange 14 vorgesehen, deren linkes Ende auf einem an der linken Seitenwand des Behälters 1 angeordneten Absatz 15 aufliegt und deren rechtes Ende durch eine Öffnung 16 aus der rechten Seitenwand des Behälters 1 nach Aussen abragt. Auf beiden Seiten der Öffnung 16 sind an der Stange 14 vorteilhaft Gummiringe 17 aufgeschoben, welche die Stange 14 lediglich um einen kleine Distanz längsverschiebbar in Bezug auf die Öffnung 16 resp. den Absatz 15 in der Position halten und ein Herausfallen der Stange 14 aus der Öffnung 16 verhindern. Wenn sich nun ein Tier durch diesen Bereich des Behälters 1 hindurch bewegt, so wird es an die Stange 14 anstossen und diese seitlich vom Absatz 15 wegbewegen. Damit fällt das linke Ende der Stange 14 auf den Boden 1' des Behälters 1, wie gestrichelt in der Figur 8 dargestellt. Damit bewegt sich das rechte, nach Aussen ragende Ende der Stange 14 nach oben und zeigt damit ebenfalls von Aussen sichtbar an, dass sich ein Tier innerhalb des Gehäuses 1 der Fangvorrichtung befindet.

In Figur 9 ist nochmals eine weitere Variante einer optischen Anwesenheitsanzeige dargestellt. Bei dieser Ausführung ragt das obere Ende 18' des senkrecht verlaufenden Schenkels 18 eines L-förmigen Bügels 19 durch eine Öffnung 20 nach oben aus dem Deckel 8 des Behälters 1 hinaus. Das freie Ende 21' des waagrechten Schenkel 21 liegt in der Ruhestellung auf einem in der rechten Seitenwand des Behälters 1 ausgebildeten Vorsprung 22 auf. Wenn sich nun ein Tier durch diesen Bereich des Behälters 1 hindurch bewegt, so wird es an den Schenkel 21 anstossen und diesen vom Vorsprung 22 wegstossen. Damit fällt der Schenkel 21 auf den Boden 1' des Behälters 1 und das obere Ende 18' des senkrechten Schenkels 18 bewegt sich nach unten. Vorteilhaft ist die Länge des Schenkels 18 derart bemessen, dass das Ende 18' in dieser Position gerade in der Öffnung 20 des Deckels 8 verschwindet, so dass eine von Aussen einfach interpretierbare optische Anzeige erfolgt.

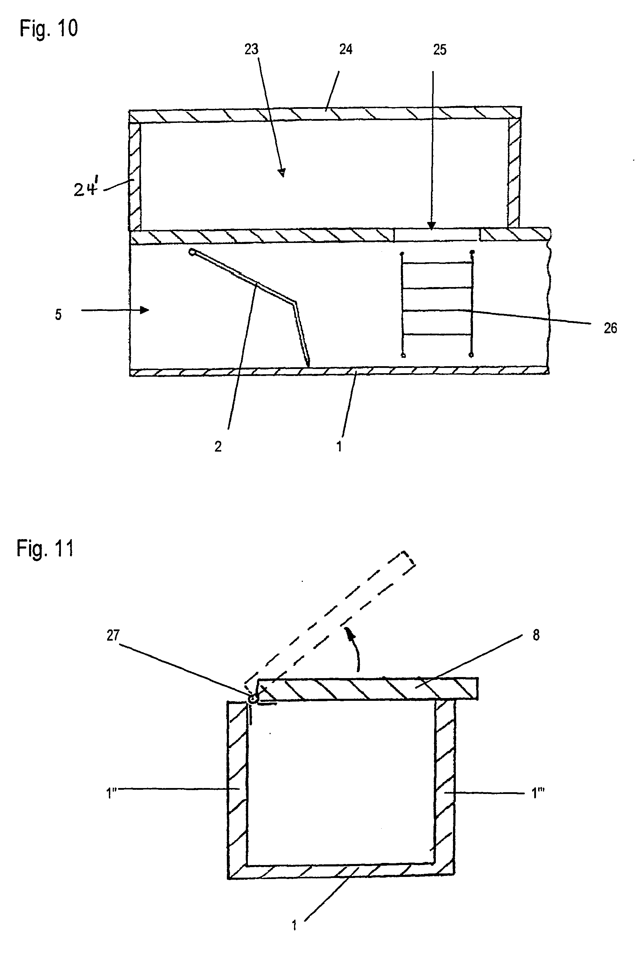

In Figur 10 ist schematisch der Längsschnitt einer weiteren Ausführungsform einer erfindungsgemässen Fangvorrichtung dargestellt. Oberhalb des an die Öffnung 5 und die Klappe 2 anschliessenden ersten Innenraumes des Behälters 1 ist ein weiterer Raum 23 gebildet. Dieser weitere Raum 23 ist beispielsweise durch einen auf dem Deckel 8 des Behälters 1 angeordneten weiteren Behälter 24 gebildet. Eine Öffnung 25 im Deckel 8 bildet den Zugang zu diesem Raum 23. Damit können nur diejenigen Tiere in diesen Raum 23 gelangen, welche eine genügende Spring- oder Kletterfähigkeit besitzen, diesen Raum 23 durch die Öffnung 25 zu besteigen. Dies ist beispielsweise bei Mäusen der Fall, einer der wichtigsten Zielgruppen für derartige Fangvorrichtungen, während beispielsweise Kriechtiere, welche über die Öffnung 5 in das Innere des Behälters 1 gelangen, nicht in den Raum 23 gelangen können. Damit wird eine weitere Selektion der zu fangenden Tiere erreicht. Insbesondere können nun in diesem Raum 23 Mittel zur Tötung der hier eindringenden Tiere angeordnet sein, beispielsweise mechanische Schlagfallen oder Giftköder. Die getöteten Tiere verbleiben damit in diesem zusätzlichen Raum 23 und verursachen keine unangenehme Geruchsentwicklung in der Umgebung der Fangvorrichtung. Damit wird verhindert, dass in die Fangvorrichtung eindringende Kriechtiere in solche Schlagfallen gelangen können und damit die Fangvorrichtung wieder lebend verlassen können, d.h. es erfolgt keine Freisetzung von vergifteten Tieren in die Umwelt (keine Sekundärvergiftungen).

Um das Eindringen der Tiere in den weiteren Raum 23 zu vereinfachen, können weiter an der Seitenwand des Behälters 1 Steighilfen, beispielsweise in Form von Sprossen resp. Griffleisten, Leitern 26 angeordnet sein.

Der Wandteil 24' des oberen Behälters 24 kann als Vollwand, Gitter oder aus Glas ausgebildet sein.

Anstelle der Anordnung von Schlagfallen zum Töten der Tiere kann natürlich auch eine Futterstelle und/oder ggf. Niststelle eingerichtet werden, um die gefangen Tiere über eine gewisse Zeit sicher am Leben zu erhalten. Damit können beispielsweise die Inspizierzeiten der Fallen verlängert werden, ohne dass die darin gefangenen Tiere verhungern oder austrocknen.

Um die gefangenen oder ggf. getöteten Tiere aus dem Behälter 1 zu entfernen, ist der Deckel 8 der Behälters 1 lösbar mit den Seitenwänden verbunden. In einer bevorzugten Ausführungsform ist der Deckel 8 dabei schwenkbar bzw. schiebbar mit einer Seitenwand 1" des Behälters 1 verbunden, wie aus Figur 11 im Querschnitt hervorgeht. Der Deckel 8 kann dabei über ein Scharnier 27 mit der Seitenwand 1" verbunden sein, welches an der Innenseite der Seitenwand 1" angeordnet ist. Damit ist das Scharnier mindestens zum Teil vor direkten Umwelteinflüssen von der Aussenseite geschützt. Der Vorteil dieser Anordnung liegt darin, dass der Deckel 8 nicht verloren gehen kann und sich ggf. durch das Eigengewicht auch selbständig wieder schliesst, wenn er entweder von Aussen oder von Innen durch ein starkes Tier, beispielsweise eines Prädators, geöffnet wird. Wenn der Deckel 8 mindestens teilweise ein Stück über die äussere Begrenzung der dem Scharnier 27 gegenüberliegenden Seitenwand 1''' des Behälters 1 abstehend ausgebildet ist, so lässt sich der Deckel 8 einfach durch untergreifen öffnen. Damit wird es ggf. auch einem Prädator ermöglicht, von Aussen den Deckel 8 anzuheben und damit an die im Innern des Gehäuses 1 gefangen Tiere, beispielsweise Mäuse, heranzukommen, welche diesem als Futter dienen können.

Es ist klar, dass beispielsweise das Scharnier 27 mittels Federelementen derart unterstützt werden können, dass sich der Deckel 8 immer selbständig in die geschlossene Position absenkt. Weiter kann das Scharnier natürlich auch quer angeordnet sein und damit der Deckel 8 quer zur Längsrichtung des Behälters 1 zu öffnen sein.

Es hat sich gezeigt, dass sich die erfindungsgemässe Fangvorrichtung besonders gut für das Fangen von anzahlmässig grossen Populationen von Mäusen eignet.

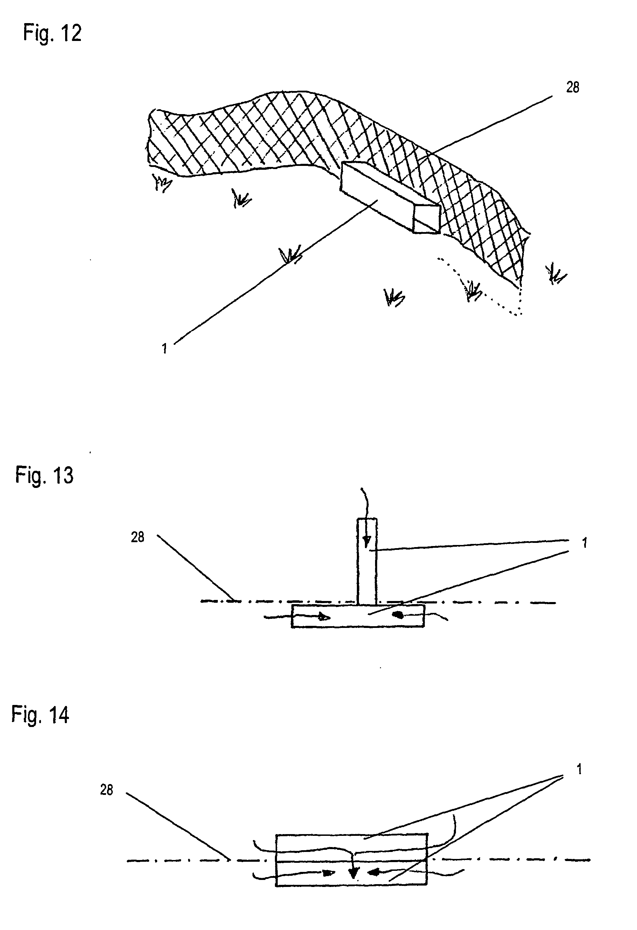

Hierfür wird das von der Mäusepopulation zu befreiende Gebiet, beispielsweise ein Feld oder ein Wiesenabschnitt, mit einem Zaun 28 eingezäunt, wie in Figur 12 schematisch in der Ansicht dargestellt. Der Zaun 28 wird dabei bis auf eine gewisse Tiefe in den Boden eingebracht, beispielsweise in eine schmale Furche, welche mit einem dafür geeigneten Bearbeitungsmittel im Boden ausgebildet wird. In der Praxis wird sich der Boden dann automatisch genügend stark an den Zaun 28 anschmiegen und diesen in der Position fixieren.

Als Zaun 28 kann vorteilhaft ein feinmaschiger Drahtzaun eingesetzt werden, dessen Höhe so bemessen ist, dass die zu fangenden Tiere, beispielsweise Mäuse, nicht in der Lage sind resp. keine Veranlassung haben, den Zaun 28 zu übersteigen. Er ist aber genügend niedrig zu halten, dass grössere Prädatoren wie beispielsweise Füchse, den Zaun 28 problemlos passieren können.

Der Zaun 28 wird geschlossen um das Gebiet herumführend angelegt und danach ein einer oder mehreren Stellen das Behälter 1 einer erfindungsgemässen Fangvorrichtung unmittelbar an den Zaun 28 herangeführt angeordnet. Beispielsweise können im Innern des Behälters 1 zusätzlich noch Lockstoffe ausgelegt werden, um die zu fangenden Tiere zusätzlich anzulocken.

In Figur 13 ist die Aufsicht auf eine weitere erfindungsgemässe Anordnung von Fangvorrichtungen entlang eines derartigen Zaunes 28 dargestellt. Dabei wird die eine Fangvorrichtung parallel zum Verlauf des Zaunes 28 angeordnet, vorteilhaft auf der Innenseite des Gebietes, aus welchem die Mäuse entfernt werden sollen, sowie eine zweite Fangvorrichtung senkrecht zur ersten Fangvorrichtung verlaufend, an diese angrenzend, auf der anderen Seite des Zaunes 28 angeordnet. Dabei können die beiden Fangvorrichtungen derart miteinander gekoppelt sein, dass die Innenräume der beiden Fangvorrichtungen untereinander verbunden sind resp. durchgehend angeordnet sind.

In Figur 14 ist schliesslich die Aufsicht auf eine weitere erfindungsgemässe Anordnung von Fangvorrichtungen entlang eines derartigen Zaunes 28 dargestellt. Dabei sind zwei Fangvorrichtungen parallel zueinander jeweils auf jeder Seite des Zaunes 28 angeordnet. Damit sind beidseitig des Zaunes 28 jeweils zwei Eintrittsöffnungen für die Tiere zugänglich und die Effizienz der Fangeinrichtung kann damit weiter gesteigert werden.

Die Fangvorrichtungen können entweder einfach auf den Boden gelegt resp. abgestellt werden oder mit zusätzlichen Befestigungsorganen gesichert werden. Beispielsweise können Heringe seitlich neben dem Behälter 1 der Fangvorrichtung als Verankerung in den Boden eingebracht werden und mit der Fangvorrichtung verbunden werden oder Bodenanker können bei geöffneter Fangvorrichtung von oben durch entsprechende Öffnungen im Boden 1' des Behälters 1 in den Boden getrieben werden und damit die Fangvorrichtung verankern.

Grundsätzlich kann der Behälter 1 aus beliebigem, möglichst witterungsbeständigem Material gefertigt werden. Besonders wirtschaftlich hat sich die Verwendung von U-förmigen Profilen für den Grundkörper des Behälters 1 erwiesen, vorzugsweise aus Kunststoff bestehend. Insbesondere die Innenseite des Behälters 1 ist vorteilhaft in dunkler Farbe gehalten, da gerade die Dunkelheit im Innern des Behälters 1 beispielsweise auf Mäuse sehr attraktiv wirkt und sie das Betreten der Fangvorrichtung durch die Öffnung 5 zusätzlich erleichtert.

## Patentansprüche

1. Fangvorrichtung für Kleintiere mit einem Behälter (1), einem eine Öffnung (5) aufweisenden Kanal, welcher in den Behälter (1) mündet resp. durch diesen gebildet ist sowie einer schwenkbar im Kanal resp. Behälter (1) angeordneten Klappe (2), welche in ihrer Ruhestellung den Öffnungsquerschnitt des Kanals resp. Behälters (1) weitestgehend verschliesst, wobei die Klappe als Abschluss eine Anzahl von stabförmigen Fortsätzen (4) aufweist, **dadurch gekennzeichnet, dass** die Klappe (2) im Bereich ihres freien Endes (3) einen Knick (K) in Richtung des Bodens (1') des Kanals resp. Behälters (1) aufweist.

2. Fangvorrichtung nach Anspruch 1, **dadurch gekennzeichnet, dass** die Klappe (2) als Gitter ausgebildet ist, vorzugsweise als feinmaschiges Gitter, und die Fortsätze (4) aus den im Wesentlichen parallel zur Längsachse des Kanals verlaufenden Gitterstäben gebildet sind.

3. Fangvorrichtung nach Anspruch 1 oder 2, **dadurch gekennzeichnet, dass** die Fortsätze (4) in Ruhestellung der Klappe (2) auf dem Boden (1') des Kanals resp. Behälters (1) aufliegen.

4. Fangvorrichtung nach einem der Ansprüche 1 bis 3, **dadurch gekennzeichnet, dass** die Klappe (2) seitlich je einen Schwenkzapfen aufweist, welche die Schwenkachse (S) bilden, und welche in entsprechenden Bohrungen der Seitenwände des Kanals resp. Behälters (1) eingreifen oder diesen durchdringen.

5. Fangvorrichtung nach einem der Ansprüche 1 bis 4, **dadurch gekennzeichnet, dass** Federmittel ausgebildet sind, welche auf die Klappe (2) derart einwirken, dass die Klappe (2) in der Ruheposition gegen die Federwirkung der Federmittel im Anschlag an den Boden (1') des Kanals resp. Behälters (1) gehalten ist.

6. Fangvorrichtung nach einem der Ansprüche 1 bis 5, **dadurch gekennzeichnet, dass** der Behälter (1) kastenförmig ausgebildet ist, wobei mindestens ein Ende eine Öffnung (5) aufweist und damit dieser Endbereich den Kanal bildet.

7. Fangvorrichtung nach einem der Ansprüche 1 bis 6, **dadurch gekennzeichnet, dass** der Behälter (1) mindestens einen lösbaren oder dreh- oder kippbaren Deckel (8) aufweist, vorzugsweise sich über die gesamte Länge des Behälters (1) erstreckend.

8. Fangvorrichtung nach Anspruch 7, **dadurch gekennzeichnet, dass** der Deckel (8) am oberen Rand einer Seitenwand (1'') des Behälters (1) mit Scharnieren (27) befestigt ist, wobei die Scharniere (27) innerhalb oder ausserhalb des Behälters (1) angeordnet sind.

9. Fangvorrichtung nach einem der Ansprüche 1 bis 8, **dadurch gekennzeichnet, dass** innerhalb des Behälters (1) angeordnete Begrenzungsmittel (7) zur Begrenzung der Schwenkbewegung der Klappe (2) ausgebildet sind, vorzugsweise einstellbare Begrenzungsmittel (7).

10. Fangvorrichtung nach einem der Ansprüche 1 bis 9, **dadurch gekennzeichnet, dass** mindestens im Bereich des Kanals resp. Eingang des Behälters (1) der Boden (1') eine Rauhigkeit aufweist, vorzugsweise eine geriffelte oder gezahnte Struktur aufweist.

11. Fangvorrichtung vorzugsweise nach einem der Ansprüche 1 bis 10, **dadurch gekennzeichnet, dass** innerhalb des Behälters (1) bewegliche Mittel (10;11;14;19) angeordnet sind, welche mit einem ausserhalb des Behälters (1) angeordnetem Anzeigelement (10';12;18') verbunden sind.

12. Fangvorrichtung nach Anspruch 11, **dadurch gekennzeichnet, dass** das Mittel aus einem vom Behälterinnern durch eine im Behälter (1) ausgebildete Bohrung (9;16;20) nach Aussen hindurch geführten Stab (10;14;20) gebildet ist, welcher im Innern des Behälters (1) mit einem mindestens über einen Teil des Behälterquerschnittes reichendem Element (11;13;14;21) verbunden ist.

13. Fangvorrichtung nach Anspruch 12, **dadurch gekennzeichnet, dass** das Element aus einer lichtdurchlässigen Platte (13) oder aus einem Stab (11), vorzugsweise einem U-förmig gebogenen Stab gebildet ist.

14. Fangvorrichtung vorzugsweise nach einem der Ansprüche 1 bis 13, **dadurch gekennzeichnet, dass** der Behälter (1) mindestens einen oberhalb des Kanals resp. Behälters (1) angeordneten, nur durch eine im Deckenbereich des Kanals oder des Behälters angeordnete Öffnung (25) zugänglichen zweiten Raum (23) aufweist.

15. Fangvorrichtung nach Anspruch 14, **dadurch gekennzeichnet, dass** der zweite Raum (23) durch einen zweiten, über dem ersten Behälter (1) angeordneten Behälter (24) gebildet ist.

16. Fangvorrichtung nach Anspruch 14 oder 15, **dadurch gekennzeichnet, dass** unterhalb resp. seitlich der Öffnung (25) Steighilfen angeordnet sind, vorzugsweise durch an der Wand des Behälters angeordnete Sprossen resp. Leitern (26).

17. Fangvorrichtung nach einem der Ansprüche 1 bis 16, **dadurch gekennzeichnet, dass** innerhalb des Gehäuses (1) mindestens eine mechanische Schlagfalle angeordnet ist.

18. Fangvorrichtung nach einem der Ansprüche 1 bis 17, **dadurch gekennzeichnet, dass** das Gehäuse (1) einen im Wesentlichen rechteckigen Querschnitt aufweist.

19. Fangvorrichtung nach einem der Ansprüche 1 bis 18, **dadurch gekennzeichnet, dass** sie mit einem mindestens bereichsweise in der Erde eingebrachten und in sich geschlossenen Drahtzaun (28) verbunden ist, vorzugsweise einem feinmaschigen Drahtzaun.

## Claims

1. Trap for small animals, comprising a container (1), a channel having an opening (5) which leads into said container (1) or is formed by said container (1), and a flap (2) pivotably arranged in the channel and
container (1), respectively, which in its normal position largely shuts the opening cross-section of the channel and container (1), respectively, wherein the flap comprises as termination a number of bar-shaped extensions (4), **characterized in that** the flap (2) comprises in the range of its free end (3) a bend (K) towards the bottom (1') of the channel and container (1), respectively.

2. Trap according to claim 1, **characterized in that** the flap (2) is formed by a grid, preferably a fine-meshed grid, and that the extensions (4) are formed by the bars of the grid running substantially parallel to the longitudinal axis of the channel.

3. Trap according to claim 1 or 2, **characterized in that**, in the normal position of the flap (2), the extensions (4) rest on the bottom (1') of the channel and container (1), respectively.

4. Trap according to one of claims 1 to 3, **characterized in that** the flap (2) comprises to the sides a trunnion each, which form a pivot axis (S) and which engage with or penetrate corresponding bore holes in the channel and container (1), respectively.

5. Trap according to one of claims 1 to 4, **characterized in that** spring means are formed, which act upon the flap (2) in such a way that in its normal position, the flap (2) is kept down to the bottom (1') of the channel and container (1), respectively, against the spring action of the spring means.

6. Trap according to one of claims 1 to 5, **characterized in that** the container (1) is box-shaped, wherein at least one end comprises an opening (5), the end region forming the channel.

7. Trap according to one of claims 1 to 6, **characterized in that** the container (1) comprises at least one detachable or rotatable or tiltable lid (8) which preferably extends over the full length of the container (1).

8. Trap according to claim 7, **characterized in that** the lid (8) is fixed to the upper edge of a side wall (1") of the container (1) by hinges (27), wherein the hinges (27) are arranged inside or outside the container (1).

9. Trap according to one of claims 1 to 8, **characterized in that** limiting means (7) for limiting the pivoting motion of the flap (2) are formed which are arranged inside the container (1), preferably adjustable limiting means (7).

10. Trap according to one of claims 1 to 9, **characterized in that** at least in the region of the channel and entrance of the container (1), respectively, the bottom (1') shows a roughness, preferably a grooved or notched structure.

11. Trap preferably according to one of claims 1 to 10, **characterized in that** inside the container (1) movable means (10;11,14;19) are arranged, which are connected to a display element (10';12;18') arranged outside the container (1).

12. Trap according to claim 11, **characterized in that** the means are formed by a bar (10;14;20) guided from the inside of the container through a bore hole (9;16;20) formed in the container (1) to the outside, which is connected on the inside of the container (1) to an element (11;13;14;21) extending over at least a portion of the cross-section of the container.

13. Trap according to claim 12, **characterized in that** the element is formed by a translucent plate (13) or by a bar (11), preferably a bar bent in a U-shape.

14. Trap preferably according to one of claims 1 to 13, **characterized in that** the container (1) comprises at least one second room (23), which is arranged above the channel and the container (1), respectively, and which is accessible solely through an opening (25) arranged in the region of the ceiling of the channel or container.

15. Trap according to claim 14, **characterized in that** the second room (23) is formed by a second container (24) arranged above the first container (1).

16. Trap according to claim 14 or 15, **characterized in that** climbing aids are arranged below or to the side of the opening (25), preferably by rungs or ladders (26) arranged at the wall of the container.

17. Trap according to one of claims 1 to 16, **characterized in that** at least one hitting trap is arranged inside the container (1).

18. Trap according to one of claims 1 to 17, **characterized in that** the housing (1) has a substantially rectangular cross-section.

19. Trap according to one of claims 1 to 18, **characterized in that** it is connected to a closed wire fence which is at least partially placed in the ground, preferably a fine-meshed wire fence.

## Revendications

1. Piège pour petits animaux, comprenant un boîtier (1), un canal avec une ouverture (5) débouchant dans ledit boîtier (1) ou formée par ce dernier, ainsi qu'un clapet (2) monté de manière pivotable dans ledit canal ou boîtier (1) respectivement et, en position de repos, fermant pratiquement la section de l'ouverture dudit canal ou boîtier (1), le clapet (2) présentant comme partie terminale un nombre de prolongations (4) en forme de barres, **caractérisée en ce que** le clapet (2) présente dans la zone de son extrémité libre (3) une partie coudée (K) en direction du fond (1') du canal ou du boîtier (1).

2. Piège selon la revendication 1, **caractérisée en ce que** le clapet (2) est configuré comme treillis, de préférence comme treillis à mailles fines, et **en ce que** lesdites prolongations (4) sont formées par les barres du treillis s'étendant essentiellement parallèlement à l'axe longitudinal du canal.

3. Piège selon la revendication 1 ou 2, **caractérisée en ce que** lesdites prolongations (4), en position de repos du clapet (2), reposent sur le fond (1') du canal ou boîtier (1).

4. Piège selon l'une des revendications 1 à 3, **caractérisée en ce que** le clapet (2) présente de chaque côté un pivot formant ensemble l'axe de pivotement (S) et qui s'engagent dans des alésages des parois latérales du canal ou du boîtier (1) ou qui traversent ces alésages.

5. Piège selon l'une des revendications 1 à 4, **caractérisée par** des éléments ressort qui agissent sur le clapet (2) de telle manière que le clapet (2), en position de repos, est retenu, contre l'action des éléments ressort, en butée contre le fond (1') du canal ou du boîtier (1).

6. Piège selon l'une des revendications 1 à 5, **caractérisée en ce que** le boîtier (1) présente la forme d'une boîte avec une ouverture (5) à au moins une extrémité, cette zone terminale formant ainsi ledit canal.

7. Piège selon l'une des revendications 1 à 6, **caractérisée en ce que** le boîtier (1) est équipé d'au moins un couvercle (8) amovible ou pivotable ou basculable, ce couvercle s'étendant de préférence sur toute la longueur du boîtier (1).

8. Piège selon la revendication 7, **caractérisée en ce que** le couvercle (8) est fixé au bord supérieur d'une paroi latérale (1") du boîtier au moyen de charnières (27), ces charnières (27) étant montées à l'intérieur ou à l'extérieur du boîtier (1).

9. Piège selon l'une des revendications 1 à 8, **caractérisée par** des éléments de butée (7) disposés à l'intérieur du boîtier (1) pour limiter le mouvement de pivotement du clapet (2), de préférence des éléments de butée réglables.

10. Piège selon l'une des revendications 1 à 9, **caractérisée en ce que** le fond (1'), au moins dans la zone du canal ou de l'entrée du boîtier (1), présente une rugosité, de préférence une structure crantée ou dentée.

11. Piège de préférence selon l'une des revendications 1 à 10, **caractérisée par** des moyens mobiles (10 ;11 ;14 ;19) à l'intérieur du boîtier (1) qui sont connectés avec un élément indicateur (10' ;12 ;18') disposé à l'extérieur du boîtier (1).

12. Piège selon la revendication 11, **caractérisée en ce que** les moyens mobiles sont formés par une barre (10 ;14 ;20) passant de l'intérieur du boîtier (1) à travers un alésage (9 ;16 ;20) formé dans le boîtier à l'extérieur, cette barre étant connectée, à l'intérieur du boîtier (1), avec un élément (11 ;13 ;14 ;21) s'étendant sur au moins une partie de la section du boîtier.

13. Piège selon la revendication 12, **caractérisée en ce que** ledit élément est formé d'une plaque transparente (13) ou d'une barre (11), de préférence d'une barre coudée en forme de U.

14. Piège de préférence selon l'une des revendications 1 à 13, **caractérisée en ce que** le boîtier (1) présente au moins une seconde chambre (23) accessible seulement à travers une ouverture (25) dans la zone du plafond du canal ou du boîtier, ladite au moins une chambre (23) étant disposée au-dessus du canal ou du boîtier (1).

15. Piège selon la revendication 14, **caractérisée en ce que** ladite seconde chambre (23) est formée par un second boîtier (24) disposé au-dessus du premier boîtier (1).

16. Piège selon la revendication 14 ou 15, **caractérisée par** des moyens d'ascension auxiliaires prévus en-dessous ou à côté de l'ouverture (25), de préférence des échelons resp. échelles (26) disposés dans la paroi du boîtier.

17. Piège selon l'une des revendications 1 à 16, **caractérisée en ce qu'**au moins une trappe de battement mécanique est disposée à l'intérieur du boîtier (1).

18. Piège selon l'une des revendications 1 à 17, **caractérisée en ce que** le boîtier présente une section essentiellement rectangulaire.

19. Piège selon l'une des revendications 1 à 18, **caractérisée en ce qu'**elle est reliée avec une clôture en treillis (28) fermée sans fin et enterrée au moins par parties, de préférence avec une clôture en treillis à mailles fines.
